Europäisches Patentamt

European Patent Office

Office européen des brevets

(11) Veröffentlichungsnummer: **0 444 545 A1**

## (12) EUROPÄISCHE PATENTANMELDUNG

(21) Anmeldenummer: 91102612.8

(22) Anmeldetag: 22.02.91

(51) Int. Cl.5: **F42B 5/307**

(30) Priorität: 27.02.90 AT 452/90

(43) Veröffentlichungstag der Anmeldung:
04.09.91 Patentblatt 91/36

(84) Benannte Vertragsstaaten:
BE CH DE ES FR GB GR IT LI NL SE

(71) Anmelder: **STEYR-DAIMLER-PUCH
Aktiengesellschaft
Postfach 62 Franz-Josefs-Kai 51
A-1011 Wien(AT)**

(72) Erfinder: **Bilgeri, Elmar
Gablerstrasse 53
A-4405 Steyr(AT)**

(54) Patronenhülse.

(57) Eine Patronenhülse weist ein metallisches Bodenstück (1) und einen mit diesem schnappverschlußartig verbundenen Hülsenmantel (2) aus
Kunststoff auf. Dabei ragt vom Bodenstück (1) in den
Hülsenmantel (2) ein an dessen Innenseite anliegendes Rohrstück (3) ein. Um schwierigkeitslos auch mit
hohen Treibgasdrücken arbeiten zu können, bildet
das ebenfalls aus Kunststoff bestehende Rohrstück
(3) einen gesonderten Teil und liegt mit einer Sohle
(4) dicht an der inneren Stirnfläche des Bodenstük-
kes (1) an. Rohrstück (3) und Bodenstück (1) sind
durch den Hülsenmantel (2) mittels desselben
Schnappverschlusses (1a, 4a) verbunden.

Die Erfindung betrifft eine Patronenhülse mit einem metallischen Bodenstück und einem mit diesem schnappverschlußartig verbundenen Hülsenmantel aus Kunststoff, wobei vom Bodenstück in den Hülsenmantel ein an dessen Innenseite anliegendes Rohrstück einragt.

Bei einer bekannten Patronenhülse dieser Art (AU-PS 164 502) ist das in den Hülsenmantel einragende Rohrstück einteilig mit dem Bodenstück ausgebildet, es besteht daher ebenfalls aus Metall und besitzt eine vergleichsweise geringe Dicke. Wenn bei der Zündung der Treibladung hohe Gasdrücke von beispielsweise 4000 - 5000 bar auftreten, so muß mit einer plastischen, also bleibenden Verformung des dünnenwandigen Rohrstückes gerechnet werden, zumal der aus Kunststoff bestehende Hülsenmantel keine Verstärkung darstellt. Durch eine solche plastische Verformung besteht dann aber die Gefahr, daß die Patronenhülse nach der Schußabgabe im Patronenlager stecken bleibt und nur mühevoll meist mit eigenen Werkzeugen herausgeholt werden kann.

Es es zwar auch schon eine Patronenhülse bekannt (AT-PS 350 942), die aus einem äußeren Mantelrohr aus Kunststoff, einem darin angeordneten Bodenteil, vorzugsweise ebenfalls aus Kunststoff und einem Zwischenstück besteht, das den Bodenteil mit dem Mantel zu einer Einheit fest verbindet. Das Zwischenstück umgreift beide Stirnenden des Bodenteiles und kann daher nur aus Spritzgußmaterial durch Einspritzen hergestellt werden. Auch diese Patronenhülse ist nur für vergleichsweise geringe Gasdrücke geeignet, wobei durch die besondere Ausbildung eine Wiederverwendbarkeit der Patronenhülse angestrebt wird.

Dem gegenüber liegt der Erfindung die Aufgabe zugrunde, die eingangs geschilderte Patronenhülse mit einfachen Mitteln so zu verbessern, daß sie, ohne Schwierigkeiten zu bereiten, hohen Gadrücken standhält.

Die Erfindung löst die gestellte Aufgabe dadurch, daß das einen gesonderten Teil bildende, ebenfalls aus Kunststoff bestehende Rohrstück mit einer an der inneren Stirnfläche des Bodenstückes dicht anliegenden Sohle versehen und durch den Hülsenmantel mittels desselben Schnappverschlusses mit dem Bodenstück verbunden ist.

Da also das Rohrstück einen gesonderten Teil bildet und daher aus Kunststoff hergestellt werden kann, obwohl das Bodenstück aus Metall besteht und so dem nach hinten gerichteten Gasdruck auf jeden Fall standhält, wird einerseits die erforderliche Dichtheit des Verbrennungsraumes nach hinten und radial nach außen erzielt, andererseits aber auch eine bleibende Verformung durch den hohen Gadruck wegen der elastischen Verformbarkeit des Kunststoffes verhindert, so daß das Ausziehen der Patronenhülse aus dem Patronenlager keine Schwierigkeiten bereitet. Das aus Kunststoff bestehende Rohrstück einerseits und der Hülsenmantel anderseits sind nur elastischen Verformungen unterworfen, so daß während der Schußabgabe zwar ein sattes Anliegen an der Innenwand des Patronenlagers sichergestellt ist, dann aber kein Festfressen zu befürchtet werden braucht. Die Montage der Patronenhülse ist einfach, da auf das Bodenstück lediglich das Rohrstück mit seiner Sohle aufgesetzt und dann der Hülsenmantel darüber geschoben zu werden braucht, wobei zur Verbindung der drei Teile nur eine einzige Schnappverschlußausbildung erforderlich ist.

Handelt es sich um eine Patronenhülse, bei der ein vom Bodenstück einwärts gerichtetes Zündrohr angeordnet ist, so bildet die Sohle des Rohrstückes eine am Zündrohr anliegende Dichtlippe, die ein Eindringen von Verbrennungsgasen zwischen der Sohle des Rohrstückes und der inneren Stirnfläche des Bodenstückes mit Sicherheit verhindert. Bei fehlendem Zündrohr wird es sich aus dem gleichen Grunde empfehlen, die Sohle mit einem gegen das Bodenstück gerichteten, in eine Nut, Eindrehung od. dgl. des Bodenstückes einragenden Kragen od. dgl. zu versehen.

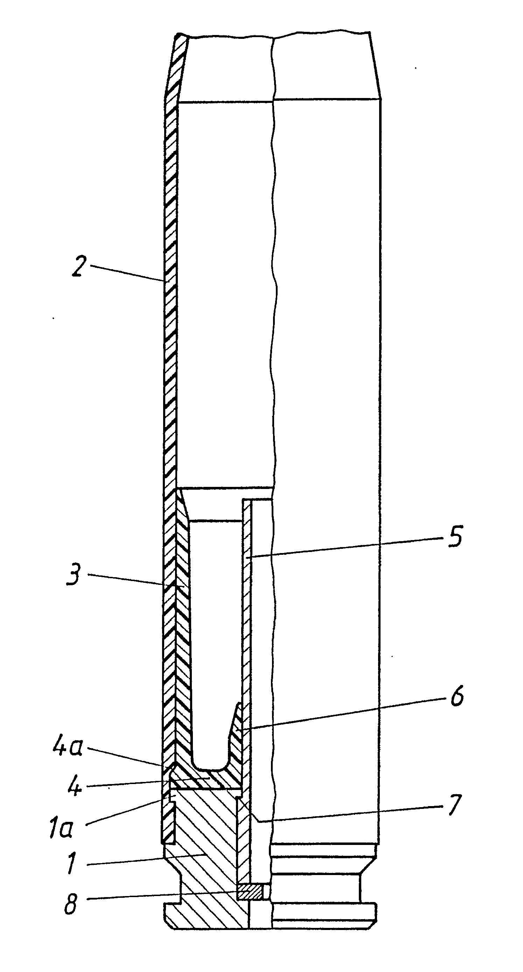

Die Zeichnung zeigt als Ausführungsbeispiel die erfindungswesentlichen Teile einer Patronenhülse im Teilschnitt.

Die Patronenhülse besitzt ein Bodenstück 1 aus Metall und einen Hülsenmantel 2 aus Kunststoff, der beim Aufstecken den Ringansatz 1a des Bodenstückes unter elastischer Verformung überwindet. Vom Bodenstück 1 ragt in den Hülsenmantel 2 ein ebenfalls aus Kunststoff bestehendes Rohrstück ein, das an der Innenseite des Hülsenmantels 2 anliegt und mit einer Sohle 4 auf der inneren Stirnfläche des Bodenstückes 1 satt aufliegt. Mit Hilfe einer konischen Anlauffläche 4a wird beim Aufschieben des Hülsenmantels 2 dieser geweitet, so daß er den Ringansatz 1a überwinden kann und das Rohrstück 3 mit dem Bodenstück 1 schnappverschlußartig verbindet.

Im Bodenstück 1 ist ein einwärts gerichtetes Zündrohr 5 eingesetzt, an dem die sohle 4 des Rohrstückes 3 mit Hilfe einer Ringlippe 6 dicht anliegt, so daß ein Austritt der Verbrennungsgase sowohl nach hinten als auch radial nach außen sicher verhindert wird.

Das Zündrohr 5 weist unten einen kleinen Außenabsatz 7 auf, so daß das Zündrohr 5 nach dem Einsetzen in das Bodenstück 1 darin verstemmt bzw. verpreßt werden kann, indem der Werkstoff des Bodenstückes über den Absatz 7 verformt wird. Das Zündrohr 5 steht unten auf einem Ring 8 auf, der zur Fertigungsvereinfachung eine Innenschulter des Bodenstückes 1 ersetzt.

**Patentansprüche**

1. Patronenhülse mit einem metallischen Bodenstück und einem mit diesem schnappverschlußartig verbundenen Hülsenmantel aus Kunststoff, wobei vom Bodenstück an den Hülsenmantel ein an dessen Innenseite anliegendes Rohrstück einragt, dadurch gekennzeichnet, daß das einen gesonderten Teil bildende, ebenfalls aus Kunststoff bestehende Rohrstück (3) mit einer an der inneren Stirnfläche des Bodenstückes (1) dicht anliegenden Sohle (4) versehen und durch den Hülsenmantel (2) mittels desselben Schnappverschlusses (1a, 4a) mit dem Bodenstück (1) verbunden ist.

2. Patronenhülse nach Anspruch 1, dadurch gekennzeichnet, daß bei Anordnung eines vom Bodenstück (1) einwärts gerichteten Zündrohres (5) die Sohle (4) des Rohrstückes (3) eine am Zündrohr (5) anliegende Ringlippe (6) bildet.

| | **EINSCHLÄGIGE DOKUMENTE** | | | EP 91102612.8 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int Cl⁵) |
| A | CH - A5 - 611 703<br>(KUPAG KUNSTOFF-PATENT-VERWAL-TUNGS AG)<br>* Seite 2, Spalte 2, Zeile 34 - Seite 3, Spalte 2, Zeile 24; Fig. 1,2 * | | 1 | F 42 B 5/307 |
| A | US - A - 4 726 296<br>(LESHNER et al.)<br>* Spalte 2, Zeile 33 - Spalte 3, Zeile 9; Fig. 1B * | | 1 | |
| D,A | AT - B - 350 942<br>(IRURETAGOYENA E. A.)<br>* Seite 2, Zeilen 1-5; Seite 2, Zeile 29 - Seite 3, Zeile 29; Seite 3, Zeile 33 - Seite 4, Zeile 35; Fig. 1,2 * | | 1<br><br>- | |
| A | DE - B - 1 113 881<br>(FA. BRÜDER ASSMANN)<br>* Gesamt * | | 1 | RECHERCHIERTE SACHGEBIETE (Int Cl⁵)<br><br>F 42 B 5/00<br>F 42 B 7/00<br>F 42 B 8/00 |

Der vorliegende Recherchenbericht wurde für alle Patentansprüche erstellt.

| Recherchenort | Abschlußdatum der Recherche | Prüfer |
|---|---|---|
| WIEN | 18-04-1991 | KALANDRA |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82